# EUROPEAN PATENT SPECIFICATION

(11) **EP 2 671 820 B1**
(45) Date of publication and mention of the grant of the patent: **07.08.2019**
(21) Application number: 12742432.3
(22) Date of filing: 17.01.2012
(51) Int. Cl.: B65D 81/38, B23K 9/00, B23K 9/02, B23K 26/20, H01M 2/10

(54) **VACUUM INSULATION CONTAINER AND METHOD FOR PRODUCING SAME**
VAKUUMISOLIERBEHÄLTER UND VERFAHREN ZU SEINER HERSTELLUNG
RÉCIPIENT D'ISOLATION SOUS VIDE ET PROCÉDÉ POUR SA PRODUCTION

(30) Priority: 02.02.2011 JP 2011021225
(43) Date of publication of application: 11.12.2013
(73) Proprietor: NGK Insulators, Ltd., Nagoya-shi, Aichi 467-8530 (JP)
(72) Inventor: UMINO, Hisashi, Tsu-shi Mie 514-2398 (JP); NAKAMURA, Keisuke, Tsu-shi Mie 514-2398 (JP); SAMPEI, Koji, Isesaki-shi Gunma 372-0825 (JP)
(74) Representative: TBK
(86) International application number: PCT/JP2012/000240
(87) International publication number: WO 2012/105169

(56) References cited:
- JP-A- 4 136 596
- JP-A- 6 047 535
- JP-A- 8 236 149
- JP-A- H08 236 149
- JP-A- 2001 280 584
- JP-A- 2002 128 191
- US-A1- 2009 308 878

## Description

### TECHNICAL FIELD

The present invention relates to a vacuum insulation container for, for example, storing a storage battery or the like, and a method for producing the same.

### BACKGROUND ART

A module of a storage battery such as a sodium-sulfur battery (NaS battery) is configured such that the storage battery is stored in a vacuum insulation container, in order to keep the storage battery in a range of its operating temperature which is a high temperature. In general, the vacuum insulation container has a double structure with an inner container and an outer container, a heat insulator such as glass fibers is injected between the inner container and the outer container, and further an internal pressure between the inner container and the outer container is reduced such that a vacuum state is created (see Patent Literatures 1 and 2).

PTL 3 discloses a box which is able to prevent the occurrence of a vacuum leak from a gap between both boxes by easily welding at positions apart from the edge lines of an inner box and an outer box without allowing the occurrence of a welding fault in the vacuum heat insulating vessel for a sodium-sulphur battery. Therefore, an inner box and an outer box are respectively made of metal plates after extending or dividing into bottom plate portions, side plate portions and a top plate portion. The edges of the respective plate portions are welded and fixed in a state that the edges of the respective plates are mutually butted in a same plane or are neatly arranged in a same direction.

PLT 4 relates to a vacuum insulated carafe which has a stainless steel body, with a stainless steel outer sidewall closed off, in part, by a cap. The cap has an eccentric opening and a reservoir affixed to the rim. The eccentric opening of the cap forms an off centre mouth that leads into the interior of the reservoir.

### CITATION LIST

### PATENT LITERATURE

[PTL 1] JP H07-105924 A
[PTL 2] JP 2001-85053 A
[PTL 3] JP H08-236149 A
[PTL 4] US 2009/308878 A

### SUMMARY OF THE INVENTION

### PROBLEMS TO BE SOLVED BY THE INVENTION

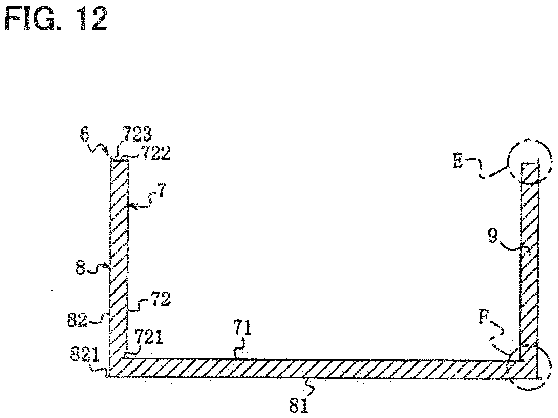

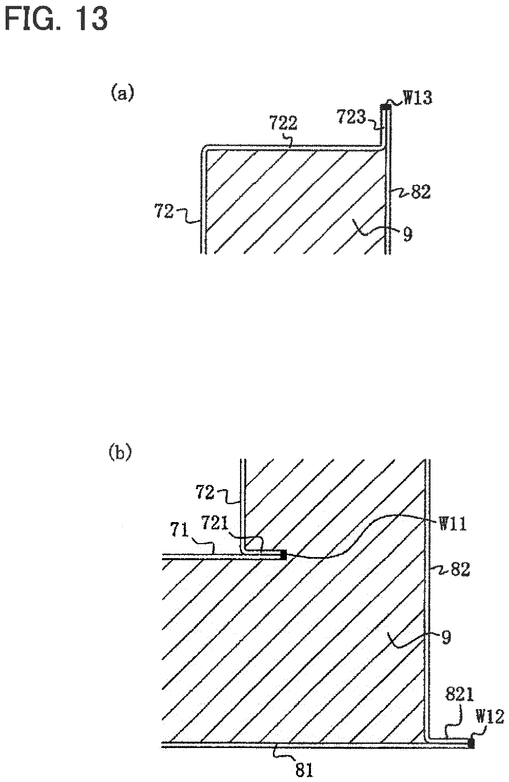

Meanwhile, for example, when a size of a vacuum insulation container is increased, it is necessary to weld a side wall and a bottom plate of an inner container and to weld a side wall and a bottom plate of an outer container. As the welded structures, those shown in FIGS. 12 and 13 are conceivable.

In a vacuum insulation container 6 in FIGS. 12 and 13, an outer container 8 is provided outside an inner container 7, and a heat insulator 9 such as glass fibers is injected to an internal space between the inner container 7 and the outer container 8. The inner container 7 includes a bottom plate 71 and a side wall 72, and a bent portion 721 is formed at a lower end portion of the side wall 72 so as to be bent at a substantially right angle and extend outwardly. The bent portion 721 is located near an edge of the bottom plate 71 and along an upper side thereof, and an end of the bent portion 721 and the edge of the bottom plate 71 are, for example, welded to each other in an overlapping state by arc welding to form a welded portion W11.

The outer container 8 also includes a bottom plate 81 and a side wall 82, and a bent portion 821 is formed at a lower end portion of the side wall 82 so as to be bent at a substantially right angle and extend outwardly. The bent portion 821 is also located near an edge of the bottom plate 81 and along an upper side thereof, and an end of the bent portion 821 and the edge of the bottom plate 81 are welded to each other in an overlapping state by arc welding to form a welded portion W12.

At an upper end portion of the side wall 72 of the inner container 7, an upper end surface 722 is formed so as to extend outwardly by bending the upper end portion at a substantially right angle, and further a bent portion 723 is formed so as to be bent at a substantially right angle from an outer end of the upper end surface 722 and extend upwardly. The bent portion 723 is located near an upper end of the wall 82 of the outer container 8 and along an inner side thereof, and an end of the bent portion 723 and the upper end of the side wall 82 are welded to each other in an overlapping state by arc welding to form a welded portion W13. An internal pressure of the internal space between the inner container 7 and the outer container 8 is reduced such that a vacuum state is created.

However, in the vacuum insulation container 6 having the above structure, for example, the welded portion W11 between the bottom plate 71 and the side wall 72 of the inner container 7 is provided so as to protrude into the internal space formed between the inner container 7 and the outer container 8. Thus, after the vacuum insulation container 6 is assembled, if a defect is found in airtightness of the welded portion W11 whereby the vacuum state cannot be maintained, or if a defect occurs in the welded portion W11 later whereby the vacuum state cannot be maintained, it is very difficult to repair the welded portion W11. In addition, since the bottom plate 71 of the inner container 7 is structured so as to protrude into the internal space between the inner container 7 and the outer container 8, there is also a problem that an extra amount of material is required for the protruding portion.

The present invention is proposed in view of the above-described problems, and an object of the present invention is to provide a vacuum insulation container that has a welded portion and that allows the welded portion to be easily repaired after a basic structure of the vacuum insulation container has been assembled, even when a defect is found in the airtightness of the welded portion whereby a vacuum state cannot be maintained, or a defect occurs in the welded portion later whereby the vacuum state cannot be maintained; and a method for producing the same. In addition, another object of the present invention is to provide a vacuum insulation container that allows a material of a bottom plate of an inner container to be reduced; and a method for producing the same.

### SOLUTION TO THE PROBLEMS

A vacuum insulation container according to claims 1 or 2 is a vacuum insulation container in which an inner container and an outer container form a container body, and an internal space provided between the inner container and the outer container is vacuumized. A welded portion required to make the internal space airtight is provided at a part exposed to a side opposite to the internal space of the container body. It should be noted that a configuration in which a heat insulator is injected to the internal space of the container body, a configuration in which nothing in particular is provided in the internal space of the container body and the internal space of the container body is merely vacuumized, and the like are possible.

According to this configuration, since the required welded portion is exposed to the side opposite to the internal space, it is possible to easily repair the welded portion after a basic structure of the vacuum insulation container having the welded portion has been assembled, even when a defect is found in airtightness of the welded portion whereby the vacuum state cannot be maintained, or a defect occurs in the welded portion later whereby the vacuum state cannot be maintained. Therefore, even when vacuum leak is found, it is possible to repair the welded portion to make a complete product, and thus it is possible to significantly improve yield. Furthermore, it is possible to eliminate necessity to conduct a work operation of dismantling and discarding the vacuum insulation container, which work operation requires more man-hours than that for assembling, and it is also possible to prevent decrease in the vacuum accuracy of the vacuum insulation container, clogging or malfunction of a vacuum pump, or the like that is caused by deterioration of the working environment due to spark, dust, or the like that occurs during the dismantling operation. On the other hand, a large amount of disposal cost is incurred in a case of discarding without dismantling, but it is possible to eliminate such a disposal cost. In addition, even when a crack occurs in the welded portion due to vibrations caused during transportation or installation, change in the temperature or humidity, earthquake, fire, or the like, it is possible to easily repair the welded portion. Moreover, the inner container is composed of a bottom plate and a separate side wall that is separate from the bottom plate, and the welded portion is between the bottom plate of the inner container and the separate side wall.

In the vacuum insulation container according to the present invention, a bent portion is formed at a lower end portion of the separate side wall so as to be bent inwardly, the bent portion may be placed on the bottom plate near an edge of the bottom plate, and an end of the bent portion and the bottom plate may be welded to each other to form the welded portion.

According to this configuration, it is possible to provide the welded portion between the bottom plate of the inner container and the separate side wall that is separate from the bottom plate on an inner surface side of the inner container that is the part exposed to the side opposite to the internal space of the container body, and thus it is possible to easily repair the welded portion between the bottom plate and the separate side wall of the inner container. In addition, it is not necessary to cause the bottom plate to protrude into the internal space between the inner container and the outer container, and thus it is possible to reduce material of the inner container. Moreover, due to the configuration in which the bent portion of the separate side wall is placed on the bottom plate near the edge of the bottom plate, for example, when the edge of the bottom plate and the outer surface of the separate side wall are aligned with each other, it is possible to easily conduct the alignment and welding.

In the vacuum insulation container according to the present invention, a bent portion is formed at a lower end portion of the separate side wall so as to be bent inwardly, a portion of the bottom plate at or near an edge of the bottom plate may be placed on the bent portion, and the edge of the bottom plate and the bent portion may be welded to each other to form the welded portion.

According to this configuration, it is possible to provide the welded portion between the bottom plate of the inner container and the separate side wall that is separate from the bottom plate on the inner surface side of the inner container that is the part exposed to the side opposite to the internal space of the container body, and thus it is possible to easily repair the welded portion between the bottom plate and the separate side wall of the inner container. In addition, it is not necessary to cause the bottom plate to protrude into the internal space between the inner container and the outer container, and thus it is possible to reduce the material of the inner container. Moreover, the lower end portion of the separate side wall is located outward of the edge of the bottom plate, and thus it is possible to further increase a volume of the inner container while an amount of material used is reduced.

In the vacuum insulation container according to the present invention, a bent portion is formed at a side end portion of the bottom plate so as to be bent upwardly, a portion of the separate side wall at or near a lower end of the separate side wall may be arranged along an outer surface of the bent portion, and an upper end of the bent portion and the separate side wall may be welded to each other to form the welded portion.

According to this configuration, it is possible to provide the welded portion between the bottom plate of the inner container and the separate side wall from the bottom plate on the inner surface side of the inner container that is the part exposed to the side opposite to the internal space of the container body, and thus it is possible to easily repair the welded portion between the bottom plate and the separate side wall of the inner container. In addition, it is not necessary to cause the side wall to protrude into the internal space between the inner container and the outer container, and thus it is possible to reduce the material of the inner container. Moreover, due to the configuration in which the portion of the separate side wall at or near the lower end thereof is arranged along the outer surface of the bent portion, for example, when the lower end of the separate side wall and the lower surface of the bottom plate are aligned with each other, it is possible to easily conduct the alignment and welding.

In the vacuum insulation container according to the present invention, a bent portion is formed at a side end portion of the bottom plate so as to be bent upwardly, a portion of the separate side wall at or near a lower end of the separate side wall may be arranged along an inner surface of the bent portion, and the lower end of the separate side wall and the bent portion may be welded to each other to form the welded portion.

According to this configuration, it is possible to provide the welded portion between the bottom plate of the inner container and the separate side wall that is separate from the bottom plate on the inner surface side of the inner container that is the part exposed to the side opposite to the internal space of the container body, and thus it is possible to easily repair the welded portion between the bottom plate and the separate side wall of the inner container. In addition, it is not necessary to cause the side wall to protrude into the internal space between the inner container and the outer container, and thus it is possible to reduce the material of the inner container. Moreover, the lower end of the separate side wall is located above the upper surface of the bottom plate, and thus it is possible to further increase the volume of the inner container while the amount of material used is reduced.

In the vacuum insulation container according to the present invention, a reinforcing welded portion formed by laser-welding the bottom plate and the bent portion of the separate side wall, or the separate side wall and the bent portion of the bottom plate to each other may be provided at a position substantially parallel to the welded portion.

According to this configuration, it is possible to further increase joining strength at both the welded portion and the reinforcing welded portion, and it is possible to more reliably ensure the airtightness of the internal space of the container body. In addition, since the reinforcing welded portion is formed by laser welding, it is possible to conduct processing with low strain, and it is possible to conduct welding for reinforcement while residual stress is reduced and deformation during the welding is prevented.

In the vacuum insulation container according to the present invention, the reinforcing welded portion may be provided at a position on a side of a center of an overlap area of the bottom plate and the bent portion of the separate side wall, the side being opposite to the welded portion, or at a position on a side of a center of an overlap area of the separate side wall and the bent portion of the bottom plate, the side being opposite to the welded portion.

According to this configuration, it is possible to reduce a part that is exposed to the internal space between the inner container and the outer container and has a double overlap in an unjoined state, and it is possible to reduce impurities such as moisture and dust attached to this overlap part and to further enhance the vacuum accuracy.

A method for producing a vacuum insulation container according to the present invention is a method for producing the above vacuum insulation container, the method including: forming the container body by forming the welded portion required to make the internal space airtight at the part exposed to the side opposite to the internal space of the container body, wherein the internal space is provided between the inner container and the outer container; testing the container body for a vacuum leak, and if a vacuum leak is detected, repairing the welded portion from the side opposite to the internal space of the container body; and vacuum-sucking an inside of the container body through a suction hole provided at a predetermined location in the container body, and closing the suction hole.

According to this configuration, it is possible to produce a vacuum insulation container having excellent airtightness by an efficient and low-cost process that provides a high yield.

A method for producing a vacuum insulation container according to the present invention is a method for producing the above vacuum insulation container, the method including: forming the container body by forming the welded portion required to make the internal space airtight at the part exposed to the side opposite to the internal space of the container body, wherein the internal space is provided between the inner container and the outer container; vacuum-sucking an inside of the container body through a suction hole provided at a predetermined location in the container body, and closing the suction hole; and testing the container body for a vacuum leak, and if a vacuum leak is detected, repairing the welded portion from the side opposite to the internal space of the container body.

According to this configuration, it is possible to produce a vacuum insulation container having excellent airtightness by an efficient and low-cost process that provides a high yield.

### ADVANTAGEOUS EFFECTS OF THE INVENTION

In the vacuum insulation container or the method for producing the vacuum insulation container according to the present invention, the welded portion is allowed to be easily repaired after the basic structure of the vacuum insulation container having the welded portion has been assembled, even when a defect is found in the airtightness of the welded portion whereby the vacuum state cannot be maintained, or a defect occurs in the welded portion later whereby the vacuum state cannot be maintained.

### BRIEF DESCRIPTION OF THE DRAWINGS

FIG. 1(a) is a plan view of a vacuum insulation container of a first embodiment according to the present invention, and FIG. 1 (b) is a front view thereof.
FIG. 2(a) is a cross-sectional view taken along the A-A line in FIG. 1(a), and FIG. 2(b) is a cross-sectional view taken along the B-B line in FIG. 1(b).
FIG. 3(a) is an enlarged cross-sectional view of a C part in FIG. 2(b), and FIG. 3(b) is an enlarged cross-sectional view of a D part in FIG. 2(b).
FIG. 4 is an explanatory perspective view illustrating a state prior to assembling the vacuum insulation container of the first embodiment.
FIG. 5 is an enlarged cross-sectional view of a part of a vacuum insulation container of a second embodiment according to the present invention which part corresponds to FIG. 3 (b).
FIG. 6 is an enlarged cross-sectional view of a part of a vacuum insulation container of a third embodiment according to the present invention which part corresponds to FIG. 3 (b).
FIG. 7 is an enlarged cross-sectional view of a part of a vacuum insulation container of a fourth embodiment according to the present invention which part corresponds to FIG. 3 (b).
FIG. 8 is an enlarged cross-sectional view of a part of a vacuum insulation container of a fifth embodiment according to the present invention which part corresponds to FIG. 3 (b).
FIG. 9(a) is an enlarged cross-sectional view of a part of a vacuum insulation container of a sixth embodiment according to the present invention which part corresponds to FIG. 3 (a), and FIG. 9(b) is an enlarged plan view of a corner of the vacuum insulation container of the sixth embodiment.
FIG. 10(a) is an explanatory perspective view illustrating a state prior to assembling an inner container of a vacuum insulation container of a seventh embodiment according to the present invention, and FIG. 10(b) is an enlarged view illustrating the vicinity of an end of a welded portion of a bottom plate thereof.
FIG. 11(a) is a cross-sectional view illustrating a welded state of an end portion of a welded portion of the bottom plate and a second side wall of the inner container in the seventh embodiment, and FIG. 11(b) is a cross-sectional view of a part in a comparative example which part corresponds to FIG. 11(a).
FIG. 12 is a cross-sectional view of a vacuum insulation container of the comparative example.
FIG. 13(a) is an enlarged cross-sectional view of an E part in FIG. 12, and FIG. 13(b) is an enlarged cross-sectional view of an F part in FIG. 12.

### DESCRIPTION OF EMBODIMENTS

Vacuum insulation containers of embodiments according to the present invention will be described with reference to the drawings.

### (Vacuum insulation container of first embodiment)

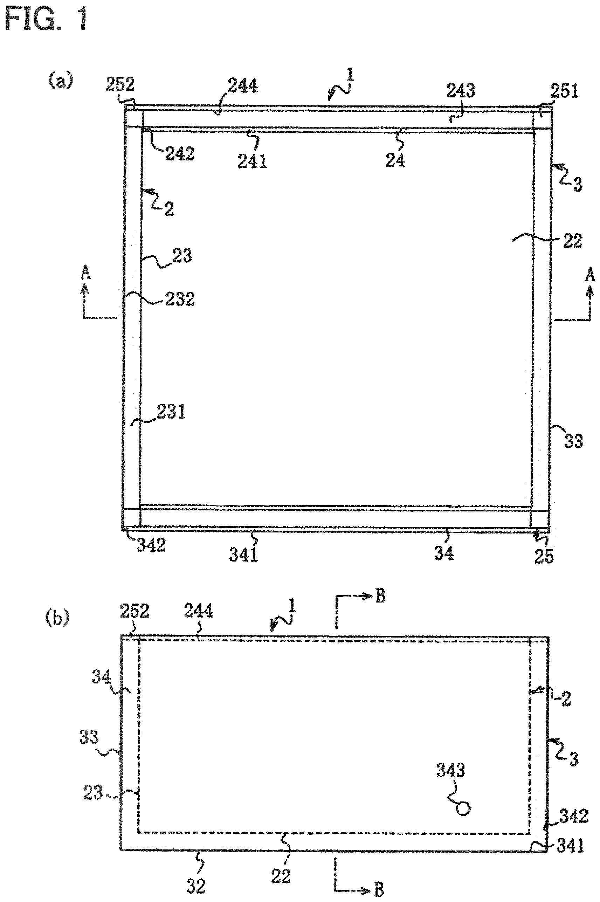

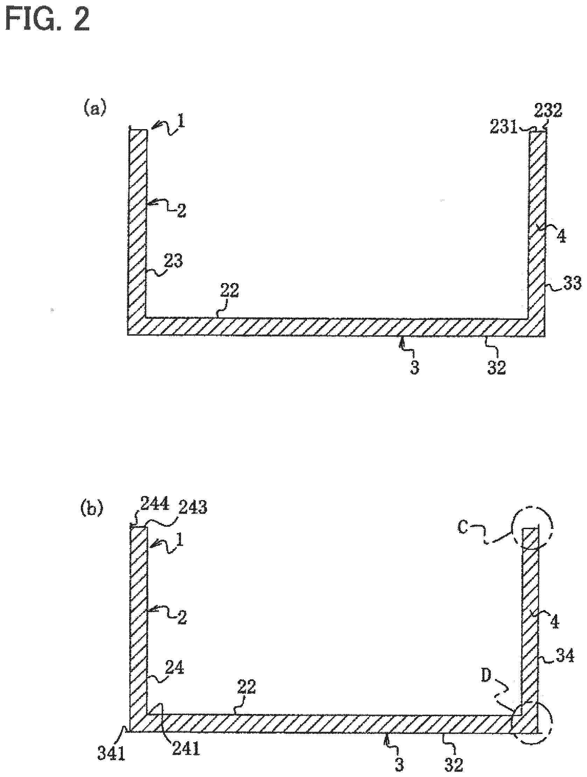

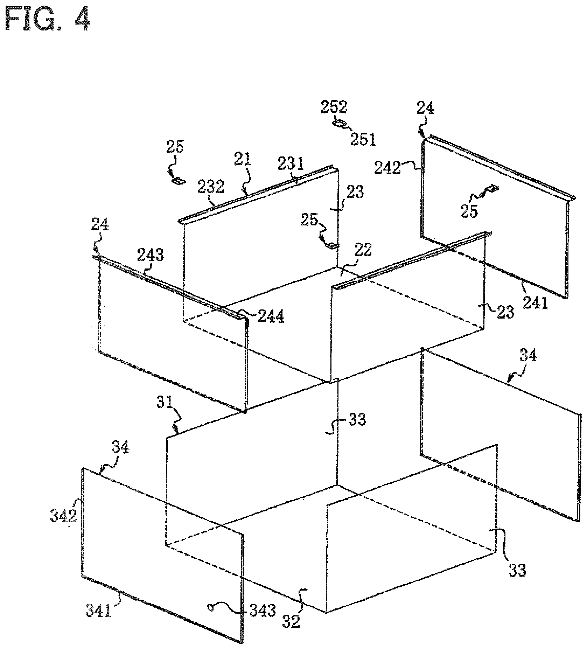

A vacuum insulation container 1 of a first embodiment is used for, for example, storing a storage battery. As shown in FIGS. 1 to 4, the vacuum insulation container 1 has a double structure in which an inner container 2 and an outer container 3 form a container body, and a heat insulator 4 such as glass fibers is injected to an internal space provided between the inner container 2 and the outer container 3. The internal space between the inner container 2 and the outer container 3 is made airtight, and an internal pressure thereof is reduced such that a vacuum state is created. Welded portions W1, W2, and W3 required to make the internal space airtight are provided at parts exposed to a side opposite to the internal space of the container body.

The inner container 2 includes an inner container body 21 composed of a bottom plate 22 and first side walls 23; second side walls 24 each of which corresponds to a side wall that is separate from the bottom plate 22; and corner portions 25 connecting upper end portions of the first side walls 23 and upper end portions of the second side walls 24. In the inner container body 21, the first side walls 23 extending upwardly and having a rectangular shape in side view are integrally formed at both edges, in one direction, of the bottom plate 22 having a rectangular shape in plan view, so as to be bent at a substantially right angle. The first side walls 23 are arranged so as to be opposed to each other. At an upper end portion of each first side wall 23, an upper end surface 231 is formed by outwardly bending the upper end portion at a substantially right angle, and a bent portion 232 is formed so as to be bent at a substantially right angle upwardly from an end of the upper end surface 231.

The second side walls 24 have a rectangular shape in front view and are arranged near both edges, in another direction, of the bottom plate 22. At a lower end portion of each second side wall 24, a bent portion 241 is formed so as to be bent inwardly, and at both side edges of each second side wall 24, bent portions 242 are formed so as to be bent inwardly. At an upper end portion of each second side wall 24, an upper end surface 243 is formed by outwardly bending the upper end portion at a substantially right angle, and a bent portion 244 is formed so as to be bent at a substantially right angle upwardly from an end of the upper end surface 243.

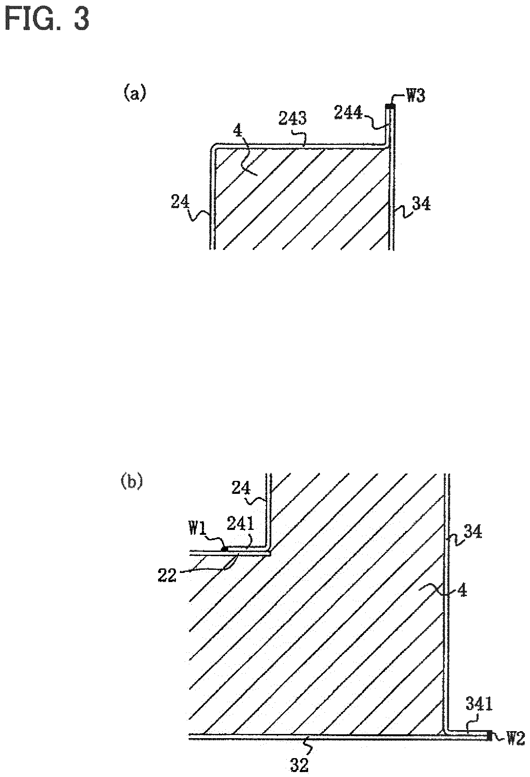

As shown in FIG. 3(b), the bent portion 241 of each second side wall 24 is placed on the bottom plate 22 near an edge of the bottom plate 22, and, in the present embodiment, is positioned and arranged such that the edge of the bottom plate 22 and an outer surface of the second side wall 24 are located at substantially the same position. An end of the bent portion 241 is fillet-welded and joined to the bottom plate 22, and the welded portion W1 provided by this welding is formed so as to extend along a part where the end of the bent portion 241 overlaps the bottom plate 22. In addition, the bent portions 242 of each second side wall 24 are arranged along inner surfaces of the first side walls 23, an end of each bent portion 242 is fillet-welded and joined to the first side wall 23, and a welded portion provided by this welding is formed so as to extend along a part where the end of the bent portion 242 overlaps the first side wall 23 (the illustration thereof is omitted).

It is possible to form the welded portions W1 and the like by an appropriate applicable welding method, and it is preferred if the welded portions W1 and the like are formed by arc welding such as TIG welding or MIG welding, or laser welding with YAG laser or the like. The same applies to the respective welded portions W2 and the like described later.

Each corner portion 25 has a base surface 251 having a rectangular shape in plan view, and a bent portion 252 that is bent at a substantially right angle and rises from an edge located adjacent to the base surface 251 and has an L shape in plan view. Edges of the base surface 251 where the bent portion 252 is not formed are butted against end portions of the upper end surface 231 and the upper end surface 243, respectively, both end portions of the bent portion 252 are butted against ends portions of the bent portions 232 and 244, respectively, and these butted parts are welded by arc welding such as TIG welding or MIG welding, or laser welding with YAG laser or the like, to form a welded portion.

The outer container 3 includes an outer container body 31 composed of a bottom plate 32 and first side walls 33; and second side walls 34 that are side walls separate from the bottom plate 32. In the outer container body 31, the first side walls 33 extending upwardly and having a rectangular shape in side view are integrally formed at both edges, in one direction, of the bottom plate 32 having a rectangular shape in plan view, so as to be bent at a substantially right angle. The first side walls 33 are arranged so as to be opposed to each other.

The second side walls 34 have a rectangular shape in front view and are arranged in vicinities of both edges, in another direction, of the bottom plate 32. At a lower end portion of each second side wall 34, a bent portion 341 is formed so as to be bent outwardly, and at both side edges of each second side wall 34, bent portions 342 are formed so as to be bent outwardly.

As shown in FIG. 3(b), the bent portion 341 of each second side wall 34 is placed on the bottom plate 32 and near an edge of the bottom plate 32, and, in the present embodiment, is positioned and arranged such that the edge of the bottom plate 32 and an end of the bent portion 341 are located at substantially the same position. The end of the bent portion 341 is welded in an overlapping state and joined to the edge of the bottom plate 32. The welded portion W2 provided by this welding is formed so as to extend along a part where the end of the bent portion 341 overlaps the edge of the bottom plate 32. In addition, the bent portions 342 of each second side wall 34 are arranged along inner surfaces of the first side walls 33, an end of each bent portion 342 is welded in an overlapping state and joined to the edge of the first side wall 33, and a welded portion provided by this welding is formed so as to extend along a part where the end of the bent portion 342 overlaps the edge of the first side wall 33 (the illustration thereof is omitted).

The bent portion 232 of each first side wall 23 of the inner container 2 and the bent portions 252 of the corner portions 25 that are butted against the bent portion 232 are arranged along the inner surface of the first side wall 33 of the outer container 3, and the bent portion 244 of each second side wall 24 of the inner container 2 and the bent portions 252 of the corner portions 25 that are butted against the bent portion 244 are arranged along an inner surface of the second side wall 34 of the outer container 3, whereby the inner container 2 is stored within the outer container 3. Then, the positions of the ends of the bent portions 232 and 252 and the upper end of each first side wall 33 are made to agree with each other, and the positions of the ends of the bent portions 244 and 252 and the upper end of each second side wall 34 are made to agree with each other, and the bent portions 232 and 252 and each first side wall 33 and the bent portions 244 and 252 and each second side wall 34 are welded to each other in an overlapping state to form the welded portion W3 as shown in FIG. 3(a). In other words, the welded portion W3 is formed continuously throughout the periphery of the vacuum insulation container 1 in plan view.

Furthermore, the heat insulator 4 is injected to the internal space between the inner container 2 and the outer container 3, and the internal space is closed by the welded portions W1, W2, and W3 and the like. Meanwhile, the internal space between the inner container 2 and the outer container 3 is vacuum-sucked through a suction hole 343 formed in the second side wall 34 of the outer container 3, and a cover whose illustration is omitted is joined to the suction hole 343 by welding or the like, whereby the internal space between the inner container 2 and the outer container 3 is maintained in a vacuum state.

In producing the vacuum insulation container 1 of the first embodiment, for example, the welded portions W1, W2, and W3 and the like required to make the internal space of the container body airtight are formed at parts exposed to the side opposite to the internal space, and the heat insulator 4 is injected to the space between the inner container 2 and the outer container 3, whereby the container body composed of the inner container 2 and the outer container 3 is formed.

Next, the container body is tested for a vacuum leak by, for example, a color check method in which a penetrant or a developer is sprayed, or the like. If a vacuum leak is detected, the welded portion where the vacuum leak is detected is repaired from the side opposite to the internal space of the container body. Then, the inside of the container body is vacuum-sucked through the suction hole 343 provided at a predetermined location in the container body and the suction hole 343 is closed, whereby the vacuum insulation container 1 is completed.

In the vacuum insulation container 1 of the first embodiment, since the welded portions W1, W2, and W3 and the like required to make the internal space between the inner container 2 and the outer container 3 airtight are exposed to the side opposite to the internal space of the container body, even when a defect is found in the airtightness of the welded portion W1, W2, or W3 or the like whereby the vacuum state cannot be maintained, or when a defect occurs in the welded portion W1, W2, or W3 or the like later the vacuum state cannot be maintained after the basic structure of the vacuum insulation container 1 has been assembled, it is possible to easily repair the welded portion W1, W2, or W3 or the like.

Therefore, even when a vacuum leak is found, it is possible to repair the welded portions W1, W2, and W3 and the like to make a complete product, and thus it is possible to significantly improve the yield. Furthermore, it is possible to eliminate the necessity to conduct a work operation of dismantling and discarding the vacuum insulation container 1, which work operation requires more man-hours than that for assembling, and it is also possible to prevent decrease in the vacuum accuracy of the vacuum insulation container 1, clogging or malfunction of a vacuum pump, or the like that is caused by deterioration of the working environment due to spark, dust, or the like that occurs during the dismantling operation. On the other hand, a large amount of disposal cost is incurred in a case of discarding without dismantling, but it is possible to eliminate such a disposal cost. In addition, even when a crack occurs in the welded portion W1, W2, or W3 or the like due to vibrations caused during transportation or installation, change in the temperature or humidity, earthquake, fire, or the like, it is possible to easily repair the welded portion W1, W2, or W3 or the like.

In addition, it is not necessary to cause the bottom plate 22 to protrude into the internal space between the inner container 2 and the outer container 3, and thus it is possible to reduce the material of the inner container 2. Moreover, when the edge of the bottom plate 22 and the edges of the first side walls 23 are aligned with respect to the outer surfaces of the second side walls 24, it is possible to easily conduct the alignment and welding. Furthermore, since each corner portion 25 is made as a component separate from the inner container body 21 and the second side walls 24, simplification of the shapes of components and segmentations of components, and the like are attempted by not providing a portion corresponding to the corner portion 25 in the inner container body 21 or each second side wall 24, and it is possible to further improve the yield.

### [Vacuum insulation container of second embodiment]

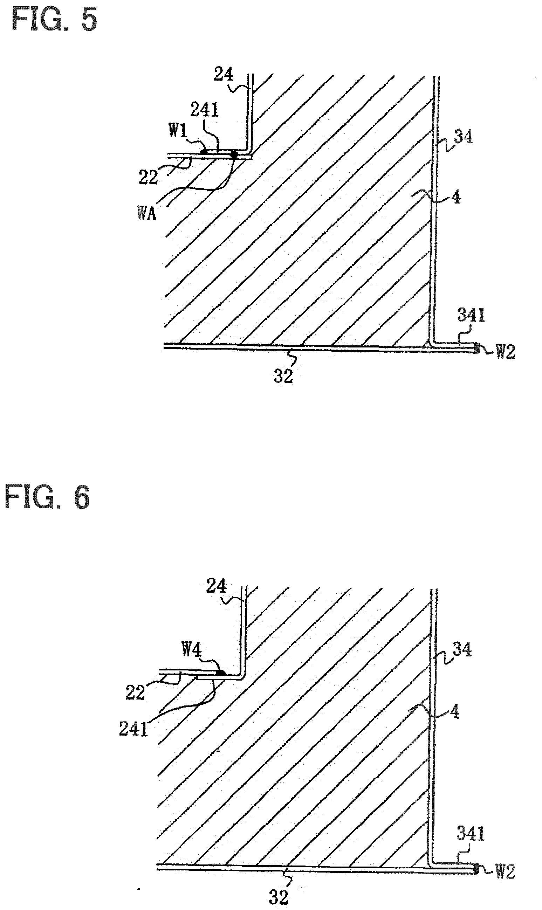

Next, a vacuum insulation container 1 of a second embodiment will be described based on FIG. 5. The basic configuration of the vacuum insulation container 1 of the second embodiment is the same as that of the first embodiment, but as shown in FIG. 5, a reinforcing welded portion WA where the bottom plate 22 and each bent portion 241 are joined to each other by laser welding with YAG laser or the like is provided at a position substantially parallel to each welded portion W1 where the end of the bent portion 241 of each second side wall 24 and the bottom plate 22 are joined to each other, and the reinforcing welded portion WA is formed so as to extend in the same direction as the direction in which the welded portion W1 extends.

It is possible to provide the reinforcing welded portion WA at an appropriate position in an overlap area of the bottom plate 22 and the bent portion 241 from the bend location of the bent portion 241 to a vicinity of the end of the bent portion 241. It is preferred if the reinforcing welded portion WA is formed at a position on a side of the center of the overlap area which side is opposite to the welded portion W1, namely, at a position on a side close to the bend location of the bent portion 241, since it is possible to reduce a part, which is exposed to the internal space between the inner container 2 and the outer container 3 and in which the bottom plate 22 and the bent portion 241 overlap each other in a state of not being joined to each other; and it is possible to reduce impurities such as moisture and dust attached to this part and to further enhance the vacuum accuracy.

Furthermore, a reinforcing welded portion where each first side wall 23 and each bent portion 242 are joined to each other by laser welding is provided also at a position substantially parallel to the welded portion where the end of each bent portion 242 of each second side wall 24 and each first side wall 23 are joined to each other, and this reinforcing welded portion is also formed so as to extend in the same direction as the direction in which the welded portion extends. It should be noted that similarly to the reinforcing welded portions WA, it is also preferred if this reinforcing welded portion is formed at a position on a side of the center of an overlap area which side is opposite to the welded portion, namely, at a position on a side close to the bend location of the bent portion 242. Furthermore, it is preferred if the reinforcing welded portions and the reinforcing welded portions WA are formed at corresponding positions so as to be connected to each other, since it is possible to improve the airtightness between the bent portions 241 and 242 and the bottom plate 22 and each first side wall 23.

It is possible to produce the vacuum insulation container 1 of the second embodiment by adding a step of forming the reinforcing welded portions WA and the like when the welded portions W1 and the like are formed in the production process in the first embodiment.

The vacuum insulation container 1 of the second embodiment provides the same advantageous effects as those of the first embodiment, allows the joining strength to be further increased at both the welded portions W1 and the like and the reinforcing welded portions WA and the like, and furthermore allows the airtightness of the internal space of the container body to be more reliably ensured. In addition, since the reinforcing welded portions WA and the like are formed by laser welding, it is possible to conduct processing with low strain, and it is possible to conduct welding for reinforcement while residual stress is reduced and deformation during the welding is prevented.

### [Vacuum insulation container of third embodiment]

Next, a vacuum insulation container 1 of a third embodiment will be described based on FIG. 6. The basic configuration of the vacuum insulation container 1 of the third embodiment is the same as that of the first embodiment, but as shown in FIG. 6, a portion of the bottom plate 22 at or near the edge thereof is placed on the bent portion 241 at the lower end portion of each of the separate second side walls 24, the edge of the bottom plate 22 is fillet-welded and joined to the bent portion 241, and a welded portion W4 provided by this welding is formed so as to extend along a part where the edge of the bottom plate 22 overlaps the bent portion 241.

In addition, each bent portion 242 of each second side wall 24 is arranged along the outer surface of each first side wall 23, the edge of each first side wall 23 is fillet-welded and joined to each bent portion 242, and a welded portion provided by this welding is formed so as to extend along a part where the edge of the first side wall 23 overlaps the bent portion 242 (the illustration thereof is omitted). It should be noted that it is also possible to produce the vacuum insulation container 1 of the third embodiment by the same production process as that of the first embodiment.

In the vacuum insulation container 1 of the third embodiment, it is possible to provide the welded portion W4 between the bottom plate 22 and each second side wall 24 of the inner container 2, and the like on the inner surface side of the inner container 2 that is a part exposed to the side opposite to the internal space of the container body. Thus, it is possible to easily repair the welded portion W4 and the like. In addition, it is not necessary to cause the bottom plate 22 to protrude into the internal space between the inner container 2 and the outer container 3, and thus it is possible to reduce the material of the inner container 2. Moreover, the lower end portion of each second side wall 24 is located outward of the edge of the bottom plate 22, and thus it is possible to further increase the volume of the inner container 2 while the amount of material used is reduced. In addition to the above, due to the configuration corresponding to that of the first embodiment, advantageous effects corresponding to those of the first embodiment are provided.

### [Vacuum insulation container of fourth embodiment]

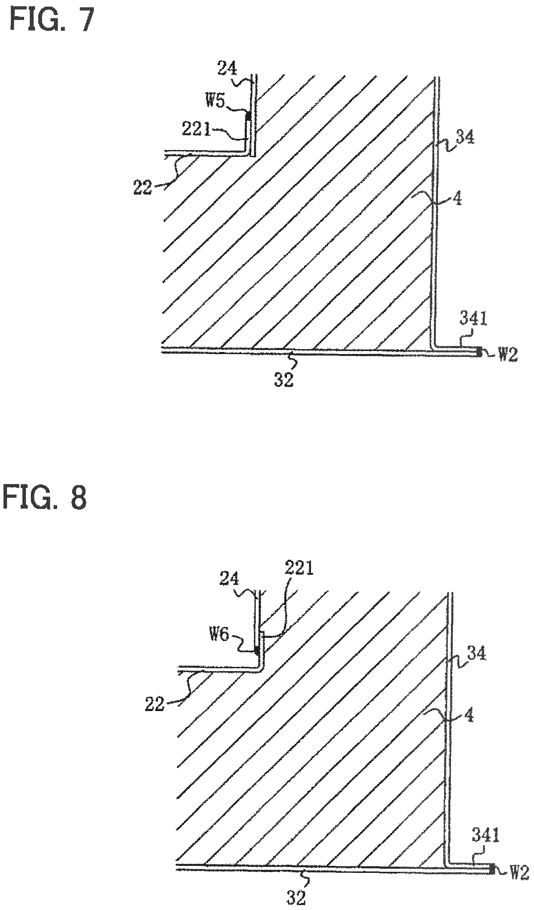

Next, a vacuum insulation container 1 of a fourth embodiment will be described based on FIG. 7. The basic configuration of the vacuum insulation container 1 of the fourth embodiment is the same as that of the first embodiment, but as shown in FIG. 7, a bent portion 221 is formed at a side end portion that is the peripheral edge of the bottom plate 22, so as to be bent upwardly, a portion of each of the separate second side walls 24 at or near the lower end of the second side wall 24 is arranged along an outer surface of the bent portion 221, an upper end of the bent portion 221 is fillet-welded and joined to each second side wall 24, and a welded portion W5 provided by this welding is located so as to extend along a part where the upper end of the bent portion 221 overlaps the second side wall 24.

In addition, in the fourth embodiment, each first side wall 23 is also made as a separate side wall, a portion of each of the separate first side walls 23 at or near the lower end of the first side wall 23 is arranged along the outer surface of the bent portion 221, the upper end of the bent portion 221 is fillet-welded and joined to each first side wall 23, and a welded portion W5 provided by this welding is located so as to extend along a part where the upper end of the bent portion 221 overlaps the first side wall 23. The side end portions of each first side wall 23 and the side end portions of each second side wall 24 are butted against each other, and butt-welded and joined to each other by laser welding, arc welding, or the like (the illustration thereof is omitted).

It should be noted that a cylindrical component that is formed continuously and integrally in a peripheral direction may be used as a side wall composed of the first side walls 23 and the second side walls 24, and arranged along the outer surface of the bent portion 221, and the upper end of the bent portion 221 may be welded to the first side walls 23 and the second side walls 24 of the cylindrical component. In addition, it is also possible to produce the vacuum insulation container 1 of the fourth embodiment by the same production process as that of the first embodiment.

In the vacuum insulation container 1 of the fourth embodiment, it is possible to provide the welded portions W5 between the bottom plate 22 of the inner container 2 and each second side wall 24 and each first side wall 23, which are separate side walls, and the like on the inner surface side of the inner container 2 that is a part exposed to the side opposite to the internal space of the container body. Thus, it is possible to easily repair the welded portions W5 and the like. In addition, it is not necessary to cause the side walls 23 and 24 to protrude into the internal space between the inner container 2 and the outer container 3, and thus it is possible to reduce the material of the inner container 2. Moreover, for example, when the lower ends of the side walls 23 and 24, which are separate components, and the lower surface of the bottom plate 22 are aligned with each other, it is possible to easily conduct the alignment and welding. In addition to the above, due to the configuration corresponding to that of the first embodiment, advantageous effects corresponding to those of the first embodiment are provided.

### [Vacuum insulation container of fifth embodiment]

Next, a vacuum insulation container 1 of a fifth embodiment will be described based on FIG. 8. The basic configuration of the vacuum insulation container 1 of the fifth embodiment is the same as that of the first embodiment, but as shown in FIG. 8, a bent portion 221 is formed at a side end portion that is the peripheral edge of the bottom plate 22, so as to be bent upwardly, a portion of each of the separate second side walls 24 at or near the lower end of the second side wall 24 is arranged along an inner surface of the bent portion 221, the lower end of each second side wall 24 is fillet-welded and joined to the bent portion 221, and a welded portion W6 provided by this welding is located so as to extend along a part where the lower end of the second side wall 24 overlaps the bent portion 221.

In addition, in the fifth embodiment, each first side wall 23 is also made as a separate side wall, a portion of each of the separate first side walls 23 at or near the lower end thereof is arranged along the inner surface of the bent portion 221, the lower end of each first side wall 23 is fillet-welded and joined to the bent portion 221, and a welded portion W6 provided by this welding is located so as to extend along a part where the lower end of the first side wall 23 overlaps the bent portion 221. The side end portions of each first side wall 23 and the side end portions of each second side wall 24 are butted against each other, and butt-welded and joined to each other by laser welding, arc welding, or the like (the illustration thereof is omitted).

It should be noted that also in the fifth embodiment, a cylindrical component that is formed continuously and integrally in a peripheral direction may be used as a side wall composed of the first side walls 23 and the second side walls 24, and arranged along the inner surface of the bent portion 221, and the lower ends of the first side walls 23 and the second side walls 24 of the cylindrical component may be welded to the bent portion 221. In addition, it is also possible to produce the vacuum insulation container 1 of the fifth embodiment by the same production process as that of the first embodiment.

In the vacuum insulation container 1 of the fifth embodiment, it is possible to provide the welded portions W6 between the bottom plate 22 of the inner container 2 and each second side wall 24 and each first side wall 23, which are separate side walls, and the like on the inner surface side of the inner container 2 that is a part exposed to the side opposite to the internal space of the container body. Thus, it is possible to easily repair the welded portions W6 and the like. In addition, it is not necessary to cause the side walls 23 and 24 to protrude into the internal space between the inner container 2 and the outer container 3, and thus it is possible to reduce the material of the inner container 2. Moreover, the lower ends of the side walls 23 and 24 are located above the upper surface of the bottom plate 22, and thus it is possible to further increase the volume of the inner container 2 while the amount of material used is reduced. In addition to the above, due to the configuration corresponding to that of the first embodiment, advantageous effects corresponding to those of the first embodiment are provided.

### [Vacuum insulation container of sixth embodiment]

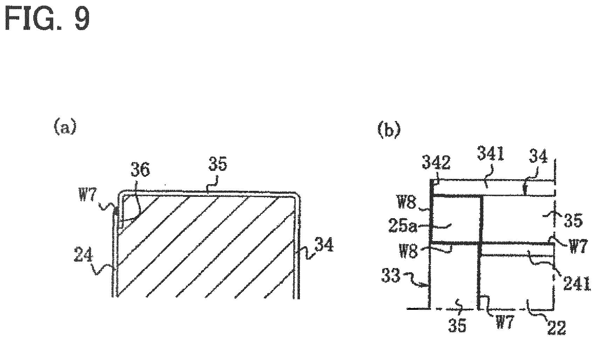

Next, a vacuum insulation container 1 of a sixth embodiment will be described based on FIG. 9. The basic configuration of the vacuum insulation container 1 of the sixth embodiment is the same as that of the first embodiment, but as shown in FIG. 9, the upper end portion of each second side wall 24 is a side that has no upper end surface 243 and no bent portion 244, and the upper end portion of each first side wall 23 is also a side that has no upper end surface 231 and no bent portion 232.

At the upper end portion of each second side wall 34 of the outer container 3, an upper end surface 35 is formed by inwardly bending the upper end portion at a substantially right angle, and a bent portion 36 is formed so as to be bent at a substantially right angle downwardly from an inner end of the upper end surface 35. The upper end surface 35 and the bent portion 36 are formed with a length equal to that of a portion obtained by cutting the second side wall 34 at both ends thereof in a width direction, so as to be shorter in width than the second side wall 34. A portion of each second side wall 24 at or near the upper end thereof is arranged along the inner surface side of the bent portion 36, the upper end of each second side wall 24 is fillet-welded and joined to the bent portion 36, and a welded portion W7 provided by this welding is located so as to extend along a part where the upper end of the second side wall 24 overlaps the bent portion 36.

In addition, also at the upper end portion of each first side wall 33 of the outer container 3, an upper end surface 35 and a bent portion 36 are similarly formed with a length equal to that of a portion obtained by cutting the first side wall 33 at both ends thereof in a width direction, so as to be shorter in width than the first side wall 33. A portion of each first side wall 23 at or near the upper end thereof is arranged along the inner surface side of the bent portion 36, the upper end of each first side wall 23 is fillet-welded and joined to the bent portion 36, and a welded portion W7 provided by this welding is located so as to extend along a part where the upper end of the first side wall 23 overlaps the bent portion 36.

At a corner composed of each second side wall 34 and each first side wall 33, the side end portion of the bent portion 36 of the second side wall 34 and the side end portion of the bent portion 36 of the first side wall 33 are butt-welded to each other. In addition, as shown in FIG. 9(b), a corner portion 25a that has a corresponding shape and is a separate component is arranged at an area that is surrounded by the second side wall 34, the first side wall 33, and the side end portions of the upper end surfaces 35 thereof and has a rectangular shape in plan view, the peripheral edges of the corner portion 25a are welded to the second side wall 34, the first side wall 33, and the side end portions of the upper end surfaces 35 thereof, respectively, via welded portions W8. It is possible to appropriately conduct these welding by laser welding, arc welding, or the like.

In addition, also in the sixth embodiment, a cylindrical component that is formed continuously and integrally in a peripheral direction may be used as a side wall composed of the first side walls 23 and the second side walls 24, and arranged along the inner surfaces of the bent portions 36, and the upper ends of the first side walls 23 and the second side walls 24 of the cylindrical component may be welded to the bent portions 36. Moreover, it is also possible to produce the vacuum insulation container 1 of the sixth embodiment by the same production process as that of the first embodiment.

In the vacuum insulation container 1 of the sixth embodiment, it is possible to reduce the material for the portions at the welded portions W5 provided by welding in an overlapping state in the first embodiment. In addition to the above, due to the configuration corresponding to that of the first embodiment, advantageous effects corresponding to those of the first embodiment are provided.

### [Vacuum insulation container of seventh embodiment]

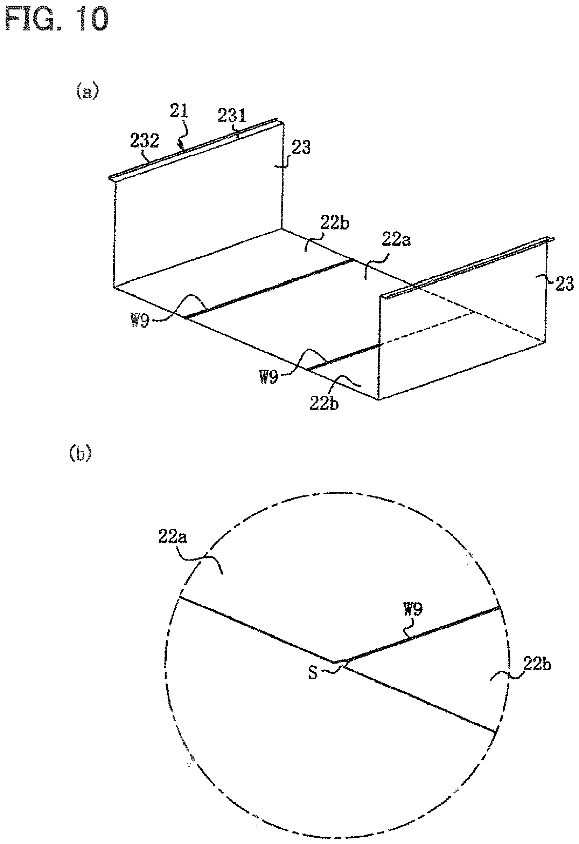

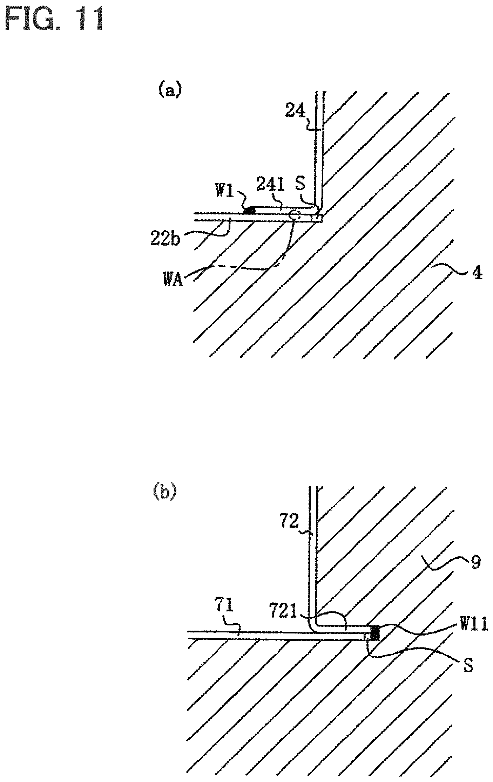

Next, a vacuum insulation container 1 of a seventh embodiment will be described based on FIGS. 10 and 11. The vacuum insulation container 1 of the seventh embodiment is used, for example, in the case where the vacuum insulation container 1 is made to have a large size, and the basic configuration thereof is the same as that of the first embodiment, but as shown in FIG. 10(a), the inner container body 21 is formed of a pair of components each composed of a partial bottom plate 22b and a first side wall 23; and a connection bottom plate 22a arranged between the partial bottom plates 22b.

In the components each composed of the partial bottom plate 22b and the first side wall 23, the first side walls 23 having a rectangular shape in side view are integrally formed at edges of the partial bottom plates 22b having a rectangular shape in plan view, so as to be bent at a substantially right angle and extend upwardly. At an upper end portion of each first side wall 23, an upper end surface 231 is formed by outwardly bending the upper end portion at a substantially right angle, and a bent portion 232 is formed so as to be bent at a substantially right angle upwardly from an end of the upper end surface 231.

Edges of the partial bottom plates 22b where the first side walls 23 are not formed are arranged so as to be opposed to each other, and the connection bottom plate 22a having a rectangular shape in plan view is arranged therebetween. The edges of the partial bottom plates 22b that do not have first side walls and side edges of the connection bottom plate 22a are brought into contact with each other, and butt-welded and joined to each other via welded portions W9 by laser welding, arc welding, or the like.

Here, as shown in FIG. 10(b), a welding notch S may occur at the starting point or end point of the welding of each linear welded portion W9. However, as shown in FIG. 11(a), when each bent portion 241 bent inward of each second side wall 24 is placed on the connection bottom plate 22a and the partial bottom plates 22b and near the edges of the connection bottom plate 22a and the partial bottom plates 22b, and the end of each bent portion 241 is fillet-welded and joined to the connection bottom plate 22a and the partial bottom plates 22b, it is possible to conduct the welding without being influenced by the welding notch S.

In contrast, when the bent portion 721 extending outward of the side wall 72 is arranged along the upper side of the bottom plate 71 and near the edge thereof, and the end of the bent portion 721 and the edge of the bottom plate 71 are welded to each other in an overlapping state to form the welded portion W11 as in a comparative example of FIG. 11(b), the position of a welding notch S overlaps the position of the welded portion W11, and the welding becomes unstable due to influence of the welding notch S. Furthermore, even when a welding notch S has not occurred, the start point or end point of the welded portion W9 may drop off due to double welding.

In the vacuum insulation container 1 of the seventh embodiment, since the bottom plate of the inner container body 21 is formed by connecting the partial bottom plates 22b and the connection bottom plate 22a, it is possible to easily form the vacuum insulation container 1 having a large size. Furthermore, it is possible to conduct stable welding while influence of the state of the end portion of the welded portion W9 between each partial bottom plate 22b and the connection bottom plate 22a is avoided. Moreover, when reinforcing welded portions WA are provided, the same advantageous effects as those of the second embodiment, such as the joining strength being further increased, are provided. In addition to the above, due to the configuration corresponding to that of the first embodiment, advantageous effects corresponding to those of the first embodiment are provided.

### [Modifications of embodiments etc.]

The inventions disclosed in the present specification include, in addition to the configurations of each invention and each embodiment, one specified by changing a part of each configuration to another configuration disclosed in the present specification, one specified by adding another configuration disclosed in the present specification to each configuration, or one made into a broader concept specified by eliminating a part of each configuration to such an extent that partial advantageous effects are obtained and, in an applicable range. The following modifications are also encompassed.

For example, in the first to third embodiments, the inner container body 21 in which the bottom plate 22 and the first side walls 23 are integrally formed, and the outer container body 31 in which the bottom plate 32 and the first side walls 33 are integrally formed, are used. However, it is possible to appropriately make an inner container and an outer container within the scope of the present invention, for example, it is possible to adopt a configuration in which the bottom plate 22 and the first side walls 23 are made into separate components or the bottom plate 32 and the first side walls 33 are made into separate components, or a configuration in which a cylindrical component in which the first side walls 23 and the second side walls 24 are connected in a peripheral manner or a cylindrical component in which the first side walls 33 and the second side walls 24 are connected in a peripheral manner is used as appropriate.

In addition, the shapes of the inner container 2 and the outer container 3 are not limited to box shapes that are rectangular parallelepiped shapes opened in upper surfaces thereof, and may be appropriately changed to, for example, bottomed cylindrical shapes. Furthermore, in the embodiments described above, the heat insulator 4 is injected to the internal space between the inner container 2 and the outer container 3, but it is also possible to make a vacuum insulation container in which the heat insulator 4 is not injected to the internal space between the inner container 2 and the outer container 3 and the internal space is merely vacuumized. Moreover, use of the vacuum insulation container of the present invention is appropriate in an applicable range other than for storing a storage battery.

In addition, also at a position substantially parallel to each of the welded portions W4 to W7 and the like in the third to sixth embodiments, it is possible to appropriately provide a reinforcing welded portion by laser welding similarly to the second embodiment. In this case, it is preferred if the reinforcing welded portion is provided at a position on a side of the center of each overlap area which side is opposite to each of the welded portions W4 to W7 and the like.

In addition, when a method of testing for a vacuum leak in a state where the internal space between the inner container 2 and the outer container 3 is vacuumized is used in each embodiment, it is also possible to produce the vacuum insulation container 1 by a process in which, in producing the vacuum insulation container 1 of each embodiment, the welded portions W1 and the like required to make the internal space between the inner container 2 and the outer container 3 airtight are formed at the parts exposed to the side opposite to the internal space of the container body, and the container body is formed; subsequently, the inside of the container body is vacuum-sucked through the suction hole 343 provided at the predetermined location in the container body, and the suction hole 343 is closed; and then the container body is tested for a vacuum leak, and if a vacuum leak is detected, the welded portions W1 and the like are repaired from the side opposite to the internal space of the container body.

### INDUSTRIAL APPLICABILITY

The present invention is applicable to, for example, a vacuum insulation container for storing a storage battery, and the like.

### REFERENCE SIGNS LIST

- 1, 6: vacuum insulation container
- 2, 7: inner container
- 21: inner container body
- 22, 71: bottom plate
- 23: first side wall
- 24: second side wall
- 231, 243, 722: upper end surface
- 221, 232, 241, 242, 244, 723: bent portion
- 25, 25a: corner portion
- 251: base surface
- 252, 721: bent portion
- 72: side wall
- 3, 8: outer container
- 31: outer container body
- 32, 81: bottom plate
- 33: first side wall
- 34: second side wall
- 341, 342, 36, 821: bent portion
- 343: suction hole
- 35: upper end surface
- 82: side wall
- 4, 9: heat insulator
- W1, W2, W3, W4, W5, W6, W7, W8, W9, W11, W12, W13: welded portion
- WA: reinforcing welded portion
- S: welding notch

## Claims

1. A vacuum insulation container (1) in which an inner container (2) and an outer container (3) form a container body and an internal space provided between the inner container (2) and the outer container (3) is vacuumized, wherein
the inner container (2) is composed of a bottom plate (22) and a separate side wall (24) that is separate from the bottom plate (22),
**characterized in that**
a welded portion (W1; W4) between the bottom plate of the inner container and the separate side wall, required to make the internal space airtight is provided at a part exposed to a side opposite to the internal space of the container body, and
a bent portion (241) is formed at a lower end portion of the separate side wall (24) so as to be bent inwardly.

2. A vacuum insulation container (1) in which an inner container (2) and an outer container (3) form a container body and an internal space provided between the inner container (2) and the outer container (3) is vacuumized, wherein
the inner container (2) is composed of a bottom plate (22) and a separate side wall (24) that is separate from the bottom plate (22),
**characterized in that**
a welded portion (W5; W6) between the bottom plate of the inner container and the separate side wall, required to make the internal space airtight is provided at a part exposed to a side opposite to the internal space of the container body, and
a bent portion (221) is formed at a side end portion of the bottom plate (22) so as to be bent upwardly.

3. The vacuum insulation container (1) according to claim 1, wherein
the bent portion (241) is placed on the bottom plate (22) near an edge of the bottom plate (22), and
an end of the bent portion (241) and the bottom plate (22) are welded to each other to form the welded portion (W1).

4. The vacuum insulation container (1) according to claim 1, wherein
a portion of the bottom plate (22) at or near an edge of the bottom plate (22) is placed on the bent portion (241), and
the edge of the bottom plate (22) and the bent portion (241) are welded to each other to form the welded portion (W4).

5. The vacuum insulation container (1) according to claim 2, wherein
a portion of the separate side wall (24) at or near a lower end of the separate side wall (24) is arranged along an outer surface of the bent portion (241), and
an upper end of the bent portion (221) and the separate side wall (24) are welded to each other to form the welded portion (W5).

6. The vacuum insulation container (1) according to claim 2, wherein
a portion of the separate side wall (24) at or near a lower end of the separate side wall (24) is arranged along an inner surface of the bent portion (221), and
the lower end of the separate side wall (24) and the bent portion (241) are welded to each other to form the welded portion (W6).

7. The vacuum insulation container (1) according to any one of claims 1 to 6, wherein a reinforcing welded portion (WA) formed by laser-welding the bottom plate (22) and the bent portion (241) of the separate side wall (24), or the separate side wall (24) and the bent portion (221) of the bottom plate (22) to each other is provided at a position substantially parallel to the welded portion (W1; W5).

8. The vacuum insulation container (1) according to claim 7, wherein the reinforcing welded portion (WA) is provided at a position on a side of a center of an overlap area of the bottom plate (22) and the bent portion (241) of the separate side wall (24), the side being opposite to the welded portion (W1), or at a position on a side of a center of an overlap area of the separate side wall (24) and the bent portion (221) of the bottom plate (22), the side being opposite to the welded portion (W5).

9. A method for producing the vacuum insulation container (1) according to any one of claims 1 to 8, the method comprising:
forming the container body by forming the welded portion (W1) required to make the internal space airtight at the part exposed to the side opposite to the internal space of the container body, wherein the internal space is provided between the inner container (2) and the outer container (3);
testing the container body for a vacuum leak, and if a vacuum leak is detected, repairing the welded portion (W1) from the side opposite to the internal space of the container body; and
vacuum-sucking an inside of the container body through a suction hole (343) provided at a predetermined location in the container body, and closing the suction hole (343).

10. A method for producing the vacuum insulation container (1) according to any one of claims 1 to 8, the method comprising:
forming the container body by forming the welded portion (W1) required to make the internal space airtight at the part exposed to the side opposite to the internal space of the container body, wherein the internal space is provided between the inner container (2) and the outer container (3);
vacuum-sucking an inside of the container body through a suction hole (343) provided at a predetermined location in the container body, and closing the suction hole (343); and
testing the container body for a vacuum leak, and if a vacuum leak is detected, repairing the welded portion (W1) from the side opposite to the internal space of the container body.

## Patentansprüche

1. Vakuumisolierbehälter (1), in dem ein innerer Behälter (2) und ein äußerer Behälter (3) einen Behälterkörper ausbilden und ein zwischen dem inneren Behälter (2) und dem äußeren Behälter (3) vorgesehener Innenraum vakuumiert ist, wobei
der innere Behälter (2) aus einer Bodenplatte (22) und einer separaten Seitenwand (24) besteht, die von der Bodenplatte (22) getrennt ist,
**dadurch gekennzeichnet, dass**
zwischen der Bodenplatte des inneren Behälters und der separaten Seitenwand an einem Teil, der zu einer Seite freiliegt, die zum Innenraum des Behälterkörpers entgegengesetzt ist, ein Schweißabschnitt (W1; W4) vorgesehen ist, der erforderlich ist, um den Innenraum luftdicht zu machen, und
an einem unteren Endabschnitt der separaten Seitenwand (24) ein gebogener Abschnitt (241) so ausgebildet ist, dass er nach innen gebogen ist.

2. Vakuumisolierbehälter (1), in dem ein innerer Behälter (2) und ein äußerer Behälter (3) einen Behälterkörper ausbilden und ein zwischen dem inneren Behälter (2) und dem äußeren Behälter (3) vorgesehener Innenraum vakuumiert ist, wobei
der innere Behälter (2) aus einer Bodenplatte (22) und einer separaten Seitenwand (24) besteht, die von der Bodenplatte (22) getrennt ist,
**dadurch gekennzeichnet, dass**
zwischen der Bodenplatte des inneren Behälters und der separaten Seitenwand an einem Teil, der zu einer Seite freiliegt, die zum Innenraum des Behälterkörpers entgegengesetzt ist, ein Schweißabschnitt (W5; W6) vorgesehen ist, der erforderlich ist, um den Innenraum luftdicht zu machen, und
an einem Seitenendabschnitt der Bodenplatte (22) ein gebogener Abschnitt (221) so ausgebildet ist, dass er nach oben gebogen ist.

3. Vakuumisolierbehälter (1) nach Anspruch 1, wobei
der gebogene Abschnitt (241) nahe an einer Kante der Bodenplatte (22) auf der Bodenplatte (22) platziert ist und
ein Ende des gebogenen Abschnitts (241) und die Bodenplatte (22) miteinander verschweißt sind, um den Schweißabschnitt (W1) auszubilden.

4. Vakuumisolierbehälter (1) nach Anspruch 1, wobei
ein Abschnitt der Bodenplatte (22) an oder nahe an einer Kante der Bodenplatte (22) auf dem gebogenen Abschnitt (241) platziert ist und
die Kante der Bodenplatte (22) und der gebogene Abschnitt (241) miteinander verschweißt sind, um den Schweißabschnitt (W4) auszubilden.

5. Vakuumisolierbehälter (1) nach Anspruch 2, wobei
ein Abschnitt der separaten Seitenwand (24) an oder nahe an einem unteren Ende der separaten Seitenwand (24) entlang einer Außenfläche des gebogenen Abschnitts (241) angeordnet ist und
ein oberes Ende des gebogenen Abschnitts (221) und die separate Seitenwand (24) miteinander verschweißt sind, um den Schweißabschnitt (W5) auszubilden.

6. Vakuumisolierbehälter (1) nach Anspruch 2, wobei
ein Abschnitt der separaten Seitenwand (24) an oder nahe an einem unteren Ende der separaten Seitenwand (24) entlang einer Innenfläche des gebogenen Abschnitts (221) angeordnet ist und
das untere Ende der separaten Seitenwand (24) und der gebogene Abschnitt (241) miteinander verschweißt sind, um den Schweißabschnitt (W6) auszubilden.

7. Vakuumisolierbehälter (1) nach einem der Ansprüche 1 bis 6, wobei durch miteinander Laserschweißen der Bodenplatte (22) und des gebogenen Abschnitts (241) der separaten Seitenwand (24) oder der separaten Seitenwand (24) und des gebogenen Abschnitts (221) der Bodenplatte (22) an einer Position im Wesentlichen parallel zum Schweißabschnitt (W1; W5) ein verstärkender Schweißabschnitt (WA) ausgebildet ist.

8. Vakuumisolierbehälter (1) nach Anspruch 7, wobei der verstärkende Schweißabschnitt (WA) an einer Position auf einer Seite einer Mitte einer Überlappungsfläche der Bodenplatte (22) und des gebogenen Abschnitts (241) der separaten Seitenwand (24), die entgegengesetzt zum Schweißabschnitt (W1) ist, oder an einer Position auf einer Seite einer Mitte einer Überlappungsfläche der separaten Seitenwand (24) und des gebogenen Abschnitts (221) der Bodenplatte (22), die entgegengesetzt zum Schweißabschnitt (W5) ist, vorgesehen ist.

9. Verfahren zur Herstellung des Vakuumisolierbehälters (1) nach einem der Ansprüche 1 bis 8, wobei das Verfahren Folgendes umfasst:
Ausbilden des Behälterkörpers, indem der Schweißabschnitt (W1), der erforderlich ist, um den Innenraum luftdicht zu machen, an dem Teil ausgebildet wird, der zu der Seite freiliegt, die zum Innenraum des Behälterkörpers entgegengesetzt ist, wobei der Innenraum zwischen dem inneren Behälter (2) und dem äußeren Behälter (3) vorgesehen ist;
Prüfen des Behälterkörpers auf ein Vakuumleck und, falls ein Vakuumleck erfasst wird, Reparieren des Schweißabschnitts (W1) von der Seite aus, die zum Innenraum des Behälterkörpers entgegengesetzt ist; und
Vakuumabsaugen eines Inneren des Behälterkörpers durch ein Absaugloch (343) hindurch, das an einer vorbestimmten Stelle im Behälterkörper vorgesehen ist, und Verschließen des Absauglochs (343).

10. Verfahren zur Herstellung des Vakuumisolierbehälters (1) nach einem der Ansprüche 1 bis 8, wobei das Verfahren Folgendes umfasst:
Ausbilden des Behälterkörpers, indem der Schweißabschnitt (W1), der erforderlich ist, um den Innenraum luftdicht zu machen, an dem Teil ausgebildet wird, der zu der Seite freiliegt, die zum Innenraum des Behälterkörpers entgegengesetzt ist, wobei der Innenraum zwischen dem inneren Behälter (2) und dem äußeren Behälter (3) vorgesehen ist;
Vakuumabsaugen eines Inneren des Behälterkörpers durch ein Absaugloch (343) hindurch, das an einer vorbestimmten Stelle im Behälterkörper vorgesehen ist, und Verschließen des Absauglochs (343); und
Prüfen des Behälterkörpers auf ein Vakuumleck und, falls ein Vakuumleck erfasst wird, Reparieren des Schweißabschnitts (W1) von der Seite aus, die zum Innenraum des Behälterkörpers entgegengesetzt ist.

## Revendications

1. Récipient d'isolation sous vide (1) dans lequel un récipient interne (2) et un récipient externe (3) forment un corps de récipient et un espace interne prévu entre le récipient interne (2) et le récipient externe (3) est mis sous vide, dans lequel :
le récipient interne (2) est composé d'une plaque inférieure (22) et d'une paroi latérale séparée (24) qui est séparée de la plaque inférieure (22),
**caractérisé en ce que** :
une partie soudée (W1 ; W4) entre la plaque inférieure du récipient interne et la paroi latérale séparée, nécessaire pour rendre l'espace interne étanche, est prévue au niveau d'une partie exposée d'un côté opposé à l'espace interne du corps de récipient, et
une partie pliée (241) est formée au niveau d'une partie d'extrémité inférieure de la paroi latérale séparée (24) afin d'être pliée vers l'intérieur.

2. Récipient d'isolation sous vide (1) dans lequel un récipient interne (2) et un récipient externe (3) forment un corps de récipient et un espace interne prévu entre le récipient interne (2) et le récipient externe (3) est mis sous vide, dans lequel :
le récipient interne (2) est composé d'une plaque inférieure (22) et d'une paroi latérale séparée (24) qui est séparée de la plaque inférieure (22),
**caractérisé en ce que** :
une partie soudée (W5 ; W6) entre la plaque inférieure du récipient interne et la paroi latérale séparée, nécessaire pour rendre l'espace interne étanche, est prévue au niveau d'une partie exposée d'un côté opposé à l'espace interne du corps de récipient, et
une partie pliée (221) est formée au niveau d'une partie d'extrémité latérale de la plaque inférieure (22) afin d'être pliée vers le haut.

3. Récipient d'isolation sous vide (1) selon la revendication 1, dans lequel :
la partie pliée (241) est placée sur la plaque inférieure (22) à proximité d'un bord de la plaque inférieure (22), et
une extrémité de la partie pliée (241) et la plaque inférieure (22) sont soudées entre elles afin de former la partie soudée (W1).

4. Récipient d'isolation sous vide (1) selon la revendication 1, dans lequel :
une partie de plaque inférieure (22) au niveau de ou à proximité d'un bord de la plaque inférieure (22) est placée sur la partie pliée (241), et
le bord de la plaque inférieure (22) et la partie pliée (241) sont soudés entre eux afin de former la partie soudée (W4).

5. Récipient d'isolation sous vide (1) selon la revendication 2, dans lequel :
une partie de la paroi latérale séparée (24) au niveau de ou à proximité d'une extrémité inférieure de la paroi latérale séparée (24) est agencée le long d'une surface externe de la partie pliée (241), et
une extrémité supérieure de la partie pliée (221) et la paroi latérale séparée (24) sont soudées entre elles afin de former la partie soudée (W5).

6. Récipient d'isolation sous vide (1) selon la revendication 2, dans lequel :
une partie de la paroi latérale séparée (24) au niveau de ou à proximité d'une extrémité inférieure de la paroi latérale séparée (24) est agencée le long d'une surface interne de la partie pliée (221), et
l'extrémité inférieure de la paroi latérale séparée (24) et la partie pliée (241) sont soudées entre elles afin de former la partie soudée (W6).

7. Récipient d'isolation sous vide (1) selon l'une quelconque des revendications 1 à 6, dans lequel une partie soudée de renforcement (WA) formée en soudant au laser la plaque inférieure (22) et la partie pliée (241) de la paroi latérale séparée (24) ou la paroi latérale séparée (24) et la partie soudée (221) de la plaque inférieure (22) entre elles, est prévue dans une position sensiblement parallèle à la partie soudée (W1 ; W5).

8. Récipient d'isolation sous vide (1) selon la revendication 7, dans lequel la partie soudée de renforcement (WA) est prévue dans une position sur un côté d'un centre d'une partie de chevauchement de la plaque inférieure (22) et de la partie pliée (241) de la paroi latérale séparée (24), le côté étant opposé à la partie soudée (W1) ou dans une position sur un côté d'un centre d'une zone de chevauchement de la paroi latérale séparée (24) et de la partie pliée (221) de la plaque inférieure (22), le côté étant opposé à la partie soudée (W5).

9. Procédé pour produire le récipient d'isolation sous vide (1) selon l'une quelconque des revendications 1 à 8, le procédé comprenant les étapes consistant à :
former le corps de récipient en formant la partie soudée (W1) nécessaire pour rendre l'espace interne étanche au niveau de la partie exposée du côté opposé à l'espace interne du corps de récipient, dans lequel l'espace interne est prévu entre le récipient interne (2) et le récipient externe (3) ;
tester le corps de récipient pour une fuite de vide, et si une fuite de vide est détectée, réparer la partie soudée (W1) du côté opposé à l'espace interne du corps de récipient ; et
faire le vide dans un intérieur du corps de récipient par un trou d'aspiration (3443) prévu dans un emplacement prédéterminé dans le corps de récipient, et fermer le trou d'aspiration (343).

10. Procédé pour produire le récipient d'isolation sous vide (1) selon l'une quelconque des revendications 1 à 8, le procédé comprenant les étapes consistant à :
former le corps de récipient en formant la partie soudée (W1) nécessaire pour rendre l'espace interne étanche au niveau de la partie exposée du côté opposé à l'espace interne du corps de récipient, dans lequel l'espace interne est prévu entre le récipient interne (2) et le récipient externe (3) ;
faire le vide dans un intérieur du corps de récipient par un trou d'aspiration (343) prévu dans un emplacement prédéterminé dans le corps de récipient, et fermer le trou d'aspiration (343) ; et
tester le corps de récipient pour une fuite de vide, et si une fuite de vide est détectée, réparer la partie soudée (W1) du côté opposé à l'espace interne du corps de récipient.
